# EUROPÄISCHE PATENTSCHRIFT

(11) **EP 0 823 859 B1**
(45) Veröffentlichungstag und Bekanntmachung des Hinweises auf die Patenterteilung: **10.11.1999**
(21) Anmeldenummer: 96913506.0
(22) Anmeldetag: 17.04.1996
(51) Int. Cl.: B01D 53/84, B01D 53/04, B01D 53/75

(54) **VERFAHREN ZUR REINIGUNG VON GASSTRÖMEN**
PROCESS FOR PURIFYING GAS STREAMS
PROCEDE DE PURIFICATION DE COURANTS GAZEUX

(30) Priorität: 28.04.1995 DE 19515075
(43) Veröffentlichungstag der Anmeldung: 18.02.1998
(73) Patentinhaber: OTTO LUFT- und KLIMATECHNIK GmbH & Co. KG, 57319 Bad Berleburg (DE)
(72) Erfinder: FATTINGER, Volker, CH-4144 Arlesheim (CH); THISSEN, Nikolaus, D-69234 Dielheim (DE)
(74) Vertreter: Katscher, Helmut, Dipl.-Ing.
(86) Internationale Anmeldenummer: EP9601600
(87) Internationale Veröffentlichungsnummer: WO9633795

(56) Entgegenhaltungen:
- EP-A- 0 414 095
- EP-A- 0 497 214
- WO-A-95/03116
- DE-A- 2 434 297
- DE-A- 4 341 467
- US-A- 3 960 771

## Beschreibung

Die Erfindung betrifft ein Verfahren zur Reinigung von Gasströmen mittels eines Biofilters mit nachgeschaltetem Adsorber, wobei durch die Regeneration (Desorption) des Adsorbens desorbierte Substanzen in ein Biofilter geleitet werden, wobei a) die Desorption mittels Luft oder einem schadstofffreien Gas im Gegenstrom zur Strömungsrichtung bei der Beladung erfolgt und b) neben brennbarem Adsorbens (z.B. Aktivkohle) im Bett des Adsorbers soviel nicht brennbares, hydrophiles Material enthalten ist, daß die Mischung nicht brennbar ist. Ein solches Verfahren ist beispielsweise aus EP-A- 0 414 095 bekannt. Die Erfindung beschäftigt sich mit einem Synergiesystem aus absorptiver oder biologischer Abluftreinigung mit nachgeschalteter Adsorption, insbesondere einer Abluftreinigungsanlage für den Umweltschutz, ist aber auch allgemein anwendbar, z.B. zur Gewinnung von Substanzen aus Gasströmen.

Es ist bekannt, adsorptive Filter (z.B. Aktivkohle-Filter oder Molekularsieb-Filter) in Kombination mit Gaswäschern oder Biofiltern einzusetzen. Die Mehrzahl der Fachleute empfiehlt den Einsatz von Adsorbern vor einem Biofilter, vor allem um Spitzenbelastungen vor dem Biofilter auszugleichen. Außerdem wird die Abluft im Biofilter - oder auch in einem Gaswäscher - mit Feuchtigkeit beladen. Das am häufigsten verwendete Adsorbens ist Aktivkohle. Die Aufnahmekapazität der Aktivkohle nimmt bei feuchter Abluft stark ab. So vermag trockene Aktivkohle aus einem Gas mit 0,5 g/m³ Toluol bei 20°C etwa 28 Gewichtsprozente Toluol zu adsorbieren; bei stark befeuchtetem Gas sinkt die Toluolaufnahme unter 8 Gewichtsprozente. Zur Desorption der Aktivkohle wird häufig Wasserdampf eingesetzt; eine Desorption mit heißer Luft ist wegen der Brandgefahr nicht möglich.

Es ist bekannt (EP-A-0414095), ein dem Biofilter nachgeschaltetes Aktivkohlefilter periodisch bei Temperaturen über 45°C zu desorbieren und die desorbierten Schadstoffe einem biologischen Abbau zuzuführen. Dort wurde jedoch nicht beabsichtigt, im Aktivkohlefilter eine restlose Schadstofffreiheit des Gases zu erzielen, sondern es wird vorgeschlagen, dem Adsorber ein weiteres Biofilter nachzuschalten, um den Adsorber höher belasten zu können.

Bei einer Desorption mittels Dampf oder mit einem indirekt beheiztem Bett (wie z.B. in der genannten EP-A-0414095 beschrieben) wird zwar die Masse der Lösungsmittel (oder anderer adsorbierter Substanzen) desorbiert, es bleibt aber stets eine im ganzen Bett verteilte Restbeladung. Nach der Wiederaufnahme des Reinigungsbetriebes können Spuren dieser Restbeladung in das Reingas gelangen, weil die Gasaustrittsseite des Adorptionsbettes nicht schadstofffrei ist.

Bekannt ist auch (EP-A-0497214), ein poröses Material als Träger für Mikroorganismen zu verwenden. Die Körner bzw. Füllkörper haben einen Kern aus hydrophilem Material, auf dessen Oberfläche eine dünne Schicht aus hydrophobem Material, z.B. Aktivkohle, aufgebracht ist.

Im Zuge der Lufthygiene wurde erkannt, daß bestimmte Substanzen auch in sehr geringen Konzentrationen eine Gefahr für Menschen darstellen, welche verschmutzte Luft einatmen.

Aufgabe der Erfindung ist es daher, ein Verfahren der eingangs genannten Gattung so auszubilden, daß ein praktisch schadstoffreies Reingas erhalten wird; dies soll mit geringerem Kostenaufwand erreicht werden als es der bekannte Stand der Technik ermöglicht. Dabei soll zugleich das Brandrisiko von Adsorbentien (z.B Aktivkohle), die mit Lösungsmitteln beladen sind, ausgeschlossen werden.

Diese Aufgabe wird erfindungsgemäß dadurch gelöst, daß
c) das nicht brennbare, hydrophile Material beim Adsorbieren mehr als 3 % seines Gewichts Wasser adsorbiert und beim Desorptionsvorgang wieder an das Gas abgibt, welches das Bett durchströmt,
d) das Desorptionsgas vor oder im Adsorptionsbett auf eine Temperatur zwischen 30 und 90°C erhitzt wird und
e) mindestens zwei Adsorber einem oder mehreren Biofiltern nachgeschaltet werden, wobei mindestens ein Adsorber die Abluft reinigt und ein Adsorber desorbiert wird, und wobei Desorptionsgas in ein Biofilter geleitet wird.

Es wurde gefunden, daß kontinuierlich ein praktisch schadstofffreies Reingas erzielt wird, wenn die Abluft in einem Biofilter und/oder einem Gaswäscher gereinigt wird und ein nachgeschalteter Adsorber im Gegenstrom in einer Kolbenströmung mit schadstofffreiem Gas (z.B. Luft) desorbiert wird, bevor Schadstoffe die Gasaustrittsseite des Adsorptionsbettes erreichen.

Im Adsorptionsbett ist neben brennbarem Adsorbens (z.B. Aktivkohle) soviel nicht brennbares, hydrophiles Material enthalten, daß die Mischung nicht brennbar ist. Das nicht brennbare, hydrophile Material muß beim Adsorbieren mehr als 3 % seines Gewichtes Wasser aufnehmen und gibt dieses beim Desorptionsvorgang wieder an das Gas ab, welches das Bett durchströmt.

Die Desorptionsgasmenge beträgt vorzugsweise 5 bis 40 % der Gasmenge, die im Reinigungsbetrieb den Adsorber durchströmt.

Vorteilhaft ist es, das Desorptionsgas zu erwärmen. Jedoch empfiehlt es sich, die Desorptionstemperatur nicht zu hoch zu wählen. Bei zu hoher Temperatur katalysiert
die Aktivkohle chemische Reaktionen, welche unerwünschte Produkte ergeben. So werden halogenierte Kohlenwasserstoffe zersetzt, oder aus reaktiven Kohlenwasserstoffen können harzartige Substanzen entstehen, welche die Poren der Aktivkohle verstopfen und nicht mehr desorbierbar sind. Das Desorptionsgas wird vor oder im Adsorptionsbett auf eine Temperatur zwischen 30 und 90°C erhitzt.

Der Aufwand an Wärmeenergie zur Desorption kann wesentlich vermindert werden, wenn beim Desorptionsvorgang das Austrittsgas durch indirekten Wärmeaustausch zur Erwärmung des schadstofffreien Desorptionsgases herangezogen wird.

Das hydrophile Merial kann als getrennte Schicht dem Aktivkohlebett vorgeschaltet werden. Es emppfiehlt sich, mindestens einen Teil des hydrophilen Materials der Aktivkohle beizumischen und somit gekörnte Aktivkohle mit Körnern aus hydrophilem Material vermischt als Adsorbens zu Verwenden.

Besonders vorteilhaft ist es, wenn Körner oder Füllkörper aus hydrophilem Material verwendet werden, dessen Oberfläche mit Aktivkohle oder einem anderen hydrophoben Adsorbens beschichtet ist. Das hydrophile Material entzieht der Aktivkohleschicht durch Diffusion Wasser. Die dermaßen getrocknete Kohle adsorbiert wesentlich mehr Lösungsmittels als feuchte Kohle.

Bei der erhöhten Temperatur während der
mehrstündigen Desorption werden die hydrophilen Körner getrocknet, so daß sie im anschließenden Reinigungsbetrieb wieder Wasser aufnehmen können. Zweckmäßig werden Körner oder Füllkörper mit 2 bis 10 mm Durchmesser verwendet.

In Abluftreinigungsanlagen, die nicht kontinuierlich verschmutzte Abluft reinigen müssen, genügt ein einziger Adsorber, für welchen die Desorption nachts bzw. über das Wochenende bzw. in anderen Perioden, in denen keine Abluft anfällt, durchgeführt wird.

Bei kontinuierlichem Anfall von verschmutzter Abluft können mindestens zwei Adsorber einem oder mehreren Biofiltern nachgeschaltet werden, wobei mindestens ein Adsorber die Abluft reinigt und ein Adsorber desorbiert wird, wobei das Desorptionsgas in ein Biofilter geleitet wird.

Nachfolgend wird ein Ausführungsbeispiel der Erfindung anhand der Zeichnung näher erläutert.

Diese zeigt eine Abluftreinigungsanlage, die gemäß folgendem Beispiel betrieben wird.

In einem Chemiewerk zur Herstellung von Vorprodukten für Pharmaka und Pflanzenschutzmittel entsteht Tag und Nacht Abluft, welche Lösungsmittel enthält. Die Konzentration der Schadstoffe in dieser Abluft ist starken Schwankungen unterworfen. Über das Wochenende gelangen wenig Lösungsmittel in die Abluft; diese muß jedoch trotzdem gereinigt werden.

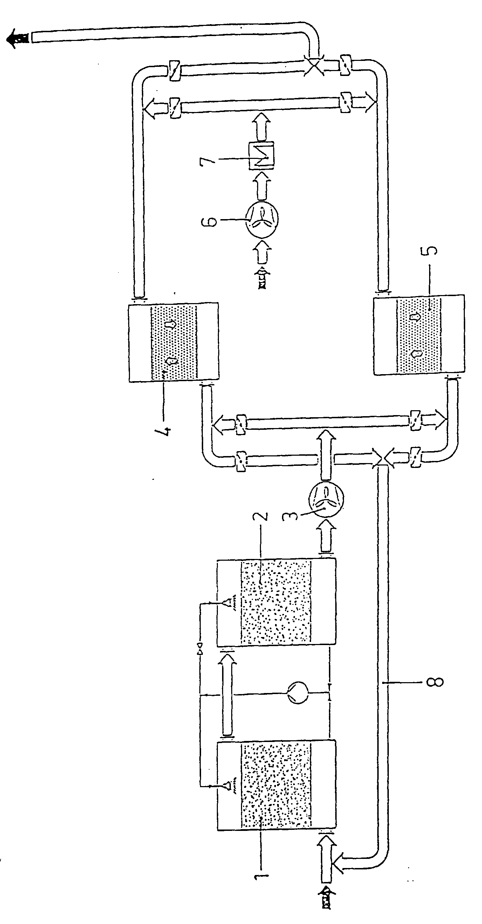

Die Abluft durchströmt einen Gaswäscher 1, ein Biofilter 2, einen Ventilator 3 und einen von zwei Absorbern 4 bzw. 5. Jeweils einer der Adsorber dient der Abluftreinigung, der zweite Adsorber 5 bzw. 4 wird mit ca. 80°C warmer Reinluft desorbiert, die über ein Gebläse 6 und einen Lufterhitzer 7 zugeführt wird. Das Desorptionsgas strömt über eine Leitung 8 zu einer stelle vor dem Gaswäscher 1. Die 100 cm hohe Füllung des Adsorbers 4 bzw. 5 (Fig. 2) besteht aus einem unteren Bett 9 von 20 cm KC-Trockenperlen oder Silicagelkörnern von 2-5 mm. Darüber befindet sich ein Bett 10 von 80 cm aus Gasbetonkörnern von 3-6 mm, welche mit Aktivkohle beschichtet sind.

Um die Energiekosten für die Desorption gering zu halten, wird wie folgt verfahren: Im oberen Teil des Adsorbens-Bettes 10 wird 20 cm unterhalb der Gausaustrittsfläche des Adsorbens Prüfgas abgesaugt und einem F.I.D. 11 zugeleitet. Sobald die Schadstoffkonzentration über 5 mg/m³ ansteigt, wird der parallele Adsorber 5 bzw. 4 in Betrieb genommen, während der beladene Adsorber 4 bzw. 5 auf Regenerationsbetrieb umgeschaltet wird. Diese Arbeitsweise stellt sicher, daß in der gereinigten Abluft kontinuierlich Schadstofffreiheit erreicht wird.

Das vom Gas durchströmte Bett der Adsorber 4 ist in Gasströmungsrichtung 800 mm tief. Es enthält mit Aktivkohle beschichtete Körner aus Gasbeton (z.B. SILYZIT 5,6 bis 14 mm der Firma YTONG). Zur Verbesserung der Wasseradsorption wurden die Körner vor deren Beschichtung mit Kohle mit CaCl₂-Lösung getränkt. Der Gehalt an Aktivkohle pro m³ Füllung liegt bei 50 kg.

Versuche haben bewiesen, daß trotz eines Toluolgehaltes von 20 kg Toluol pro m³ Adsorbensmasse die Masse nicht brennbar ist.

## Patentansprüche

1. Verfahren zur Reinigung von Gasströmen mittels eines Biofilters mit nachgeschaltetem Adsorber, wobei durch die Regeneration (Desorption) des Adsorbens desorbierte Substanzen in ein Biofilter geleitet werden, wobei
a) die Desorption mittels Luft oder einem schadstofffreien Gas im Gegenstrom zur Strömungsrichtung bei der Beladung erfolgt,
b) neben brennbarem Adsorbens (z.B. Aktivkohle) im Bett des Adsorbers soviel nicht brennbares, hydrophiles Material enthalten ist, daß die Mischung nicht brennbar ist,
dadurch gekennzeichnet, daß
c) das nicht brennbare, hydrophile Material beim Adsorbieren mehr als 3 % seines Gewichtes Wasser adsorbiert und beim Desorptionsvorgang wieder an das Gas abgibt, welches das Bett durchströmt,
d) das Desorptionsgas vor oder im Adsorptionsbett auf eine Temperatur zwischen 30 und 90°C erhitzt wird und
e) daß mindestens zwei Adsorber einem oder mehreren Biofiltern nachgeschaltet werden, wobei mindestens ein Adsorber die Abluft reinigt und ein Adsorber desorbiert wird, und wobei Desorptionsgas in ein Biofilter geleitet wird.

2. Verfahren nach Anspruch 1, dadurch gekennzeichnet, daß die Desorptionsgasmenge 5 bis 40 % der Gasmenge beträgt, die im Reinigungsbetrieb den Adsorber durchströmt.

3. Verfahren nach einem der vorangehenden Ansprüche, dadurch gekennzeichnet, daß beim Desorptionsvorgang das Austrittsgas durch indirekten Wärmeaustausch zur Erwärmung des schadstofffreien Desorptionsgases herangezogen wird.

4. Verfahren nach einem der vorangehenden Ansprüche, dadurch gekennzeichnet, daß als hydrophiles Material Gasbeton, Schaumglas, Silicagel oder ähnliche, poröse Substanzen eingesetzt werden.

5. Verfahren nach einem der vorangehenden Ansprüche, dadurch gekennzeichnet, daß gekörnte Aktivkohle mit Körnern aus hydrophilem Material vermischt als Adsorbens verwendet wird.

6. Verfahren nach einem der vorangehenden Ansprüche, dadurch gekennzeichnet, daß Körner oder Füllkörper aus hydrophilem Material verwendet werden, dessen Oberfläche mit Aktivkohle oder einem anderen hydrophoben Adsorbens beschichtet ist.

7. Verfahren nach Anspruch 7, dadurch gekennzeichnet, daß Körner oder Füllkörper mit 2 bis 10 mm Durchmesser verwendet werden.

8. Verfahren nach einem der vorangehenden Ansprüche, dadurch gekennzeichnet, daß die Desorption nachts bzw. über das Wochenende bzw. in anderen Perioden, in denen keine Abluft anfällt, durchgeführt wird.

## Claims

1. Process for cleaning gas streams using a biofilter with downstream adsorber, where, as a result of the regeneration (desorption) of the adsorbing agent, desorbed substances are directed into a biofilter, where
a) desorption takes place during charging by means of air or a pollutant-free gas moving in the opposite direction to the direction of flow
b) besides combustible adsorbing agents (e.g. activated charcoal), the bed of the adsorber contains so much non-combustible, hydrophilic material, that the mixture is non-combustible
characterised in that
c) the non-combustible, hydrophilic material adsorbs more than 3% of its weight of water during the adsorption process and, during the desorption process, returns it to the gas, which is flowing through the bed,
d) the desorption gas is heated to a temperature between 30 and 90°C before or in the adsorption bed, and
e) at least two adsorbers are connected downstream of one or more biofilters, where at least one adsorber cleans the exhaust air and one adsorber is desorbed, and where desorption gas is directed into a biofilter.

2. Process according to claim 1, characterised in that the amount of desorption gas is 5 to 40% of the quantity of gas which passes through the adsorber during the cleaning operation.

3. Process according to any of the preceding claims, characterised in that, during the desorption process, the discharge gas is used to heat the pollutant-free desorption gas by indirect heat exchange.

4. Process according to any of the preceding claims, characterised in that, gas concrete, foam glass, silica gel or similar, porous substances are used as the hydrophilic material.

5. Process according to any of the preceding claims, characterised in that granulated activated charcoal mixed with granules of hydrophilic material is used as the adsorbing agent.

6. Process according to any of the preceding claims, characterised in that granules or fillers of hydrophilic material are used, where the surface of said granules or fillers is coated with activated charcoal or other hydrophobic adsorbing agent.

7. Process according to claim 7, characterised in that granules or fillers with diameters of 2 to 10 mm are used.

8. Process according to any of the preceding claims, characterised in that desorption is carried out at night, over the weekend or at other times when no exhaust air is produced.

## Revendications

1. Procédé d'épuration de courants de gaz au moyen d'un filtre biologique suivi d'un adsorbeur, dans lequel des substances désorbées par la régénération (désorption) de l'adsorbant sont acheminées dans un filtre biologique et :
(a) la désorption se fait au moyen d'air ou d'un gaz exempt de contaminants à contre-courant avec le sens d'écoulement lors du chargement,
(b) il y a dans le lit de l'adsorbeur, outre l'adsorbant combustible (par exemple du charbon activé), tellement de matériau hydrophile non combustible que le mélange n'est pas combustible,
caractérisé en ce que :
(c) le matériau hydrophile non combustible adsorbe, lors de l'adsorption, plus de 3% son poids d'eau et redélivre, lors de l'opération de désorption, le gaz qui s'écoule à travers le lit,
(d) le gaz de désorption est chauffé à une température entre 30 et 90°C avant ou dans le lit d'adsorption, et
(e) au moins deux adsorbeurs suivent un ou plusieurs filtres biologiques, au moins un adsorbeur épurant l'air pollué et un adsorbeur étant désorbé, le gaz de désorption étant acheminé dans un filtre biologique.

2. Procédé selon la revendication 1, caractérisé en ce que la quantité de gaz de désorption est de 5% à 40% de la quantité de gaz qui s'écoule à travers l'adsorbeur au cours de l'opération d'épuration.

3. Procédé selon l'une quelconque des revendications précédentes, caractérisé en ce que, lors de l'opération de désorption, le gaz de sortie est soumis à un échange de chaleur indirect pour réchauffer le gaz de désorption exempt de contaminants.

4. Procédé selon l'une quelconque des revendications précédentes, caractérisé en ce qu'on utilise comine matériau hydrophile du béton cellulaire, de la mousse de verre, du gel de silice ou des substances poreuses similaires.

5. Procédé selon l'une quelconque des revendications précédentes, caractérisé en ce qu'on utilise du charbon activé granulé mélangé à des grains de matériau hydrophile comme adsorbant.

6. Procédé selon l'une quelconque des revendications précédentes, caractérisé en ce qu'on utilise des grains ou des corps de remplissage de matériau hydrophile dont la surface est revêtue de charbon activé ou d'un autre adsorbant hydrophile.

7. Procédé selon la revendication 7, caractérisé en ce qu'on utilise des grains ou des corps de remplissage d'un diamètre de 2 à 10 mm.

8. Procédé selon l'une quelconque des revendications précédentes, caractérisé en ce que la désorption est effectuée de nuit ou en fin de semaine ou dans d'autres périodes au cours desquelles il n'est pas produit d'air pollué.
